(19) Europäisches Patentamt
European Patent Office
Office européen des brevets

(11) **EP 4 621 715 A1**

(12) **EUROPEAN PATENT APPLICATION**

(43) Date of publication:
**24.09.2025 Bulletin 2025/39**

(21) Application number: **25157572.6**

(22) Date of filing: **13.02.2025**

(51) International Patent Classification (IPC):
***G06T 7/579*** (2017.01)

(52) Cooperative Patent Classification (CPC):
**G06T 7/579; G06T 2207/30252**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.03.2024 JP 2024042334**

(71) Applicant: **Ricoh Company, Ltd.
Tokyo 143-8555 (JP)**

(72) Inventors:
• **Kimura, Sukehiro
Tokyo, 143-8555 (JP)**
• **Okamoto, Toshihiro
Tokyo, 143-8555 (JP)**
• **Aoki, Shin
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **INFORMATION PROCESSING SYSTEM, INFORMATION PROCESSING METHOD, AND CARRIER MEDIUM**

(57) An information processing system determines a position using a first imaging device (20A) and a second imaging device (20B) each of which is mounted on a mobile body (10) and captures monocular images. The information processing system includes a storage area (69) to store an environment map depicting a surrounding environment in which the mobile body (10) moves, a first self-localization unit (60) to determine a first position of the first imaging device (20A) on the environment map based on a monocular image captured by the first imaging device (20A) and the environment map, a second self-localization unit (60) to determine a second position of the second imaging device (20B) on the environment map based on a monocular image captured by the second imaging device (20B) and the environment map, and a correction unit (61) to generate correction information for correcting a scale of the environment map based on a distance between the first position and the second position on the environment map and a reference distance between the first imaging device (20A) and the second imaging device (20B).

FIG. 1

EP 4 621 715 A1

**Description**

BACKGROUND

Technical Field

The present disclosure relates to an information processing system, an information processing method, and a carrier medium.

Related Art

There are simultaneous localization and mapping (SLAM) techniques for simultaneously performing self-localization (self-position estimation) of a mobile body and generation of an environment map. Such techniques include visual SLAM (VSLAM) in which an image captured by an imaging device is used for simultaneous self-localization and environment map generation.

VSLAM techniques include a technique of combining a monocular camera and a depth sensor, a technique using a stereo camera, and a technique using only monocular images captured by a monocular camera. When only monocular images are input, the distance unit of the environment map generated by VSLAM is unknown, and separate scale adjustment is performed to convert the environment map to match the positions and distances in real space.

For this reason, in addition to an imaging device, an auxiliary sensor such as a wheel odometry sensor is typically used for scale adjustment.

Japanese Unexamined Patent Application Publication No. 2022-015978 proposes the following method in relation to the above conversion to the position in real space. The method includes: causing an unattended aerial vehicle to take off from a position where a position marker placed alongside the flight route can be imaged; determining a reference position of the aerial vehicle based on the position information of the imaged position marker; estimating the deviation from the reference position to calculate the aerial vehicle's current position while the aerial vehicle flies along the flight route; and, when the accuracy of the position information included in the signal from a position measurement system is lower than the threshold value, transmits the position information of the calculated current flight position to a flight controller instead of the position information of the signal. In the related art method, the reference position of the aerial vehicle is determined based on the position information of the position marker, and the deviation from the reference position is estimated while the aerial vehicle flies along the flight route. However, the related art method uses the position information of the position marker, and scale adjustment cannot be completed by the aerial vehicle alone. Accordingly, an auxiliary sensor other than an imaging device is used, or scale adjustment is not feasible in an environment where a marker cannot be used.

SUMMARY

The present disclosure described herein provides an information processing system that determines a position using a first imaging device and a second imaging device each of which is mounted on a mobile body and captures monocular images. The information processing system includes a storage area to store an environment map depicting a surrounding environment in which the mobile body moves, a first self-localization unit to determine a first position of the first imaging device on the environment map based on a monocular image captured by the first imaging device and the environment map, a second self-localization unit to determine a second position of the second imaging device on the environment map based on a monocular image captured by the second imaging device and the environment map, and a correction unit to generate correction information for correcting a scale of the environment map based on a distance between the first position and the second position on the environment map and a reference distance between the first imaging device and the second imaging device.

The present disclosure described herein provides an information processing method for determining a position using a first imaging device and a second imaging device each of which is mounted on a mobile body and captures monocular images. The method includes reading an environment map depicting a surrounding environment in which the mobile body moves from a storage area, determining a first position of the first imaging device on the environment map based on a monocular image captured by the first imaging device and the environment map, determining a second position of the second imaging device on the environment map based on a monocular image captured by the second imaging device and the environment map, and generating correction information for correcting a scale of the environment map based on a distance between the first position and the second position on the environment map and a reference distance between the first imaging device and the second imaging device.

The present disclosure described herein provides a carrier medium carrying computer readable codes which, when executed by a computer system, cause the computer system to carry out the method described above.

According to one aspect of the present disclosure, the scale of the environment map can be corrected using monocular images without any auxiliary sensor or a marker other than those provided for the imaging devices.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram illustrating generation of an environment map in a warehouse;
FIG. 2 is a diagram illustrating an overall configuration of a map generation system;
FIG. 3 is a schematic diagram illustrating how two spherical cameras are mounted on a forklift in the map generation system illustrated in FIG. 2;
FIG. 4 is a block diagram illustrating a hardware configuration of an on-board computer of the map generation system illustrated in FIG. 2;
FIG. 5 is a block diagram illustrating a functional configuration of the map generation system illustrated in FIG. 2;
FIG. 6 is a block diagram illustrating a detailed functional configuration relating to a mobile-body position obtaining unit of the map generation system illustrated in FIG. 2;
FIG. 7 is a flowchart of a map generation and position determination process performed by the on-board computer of the map generation system illustrated in FIG. 2;
FIG. 8 is a diagram illustrating a process of correcting the scale of an environment map performed by the map generation system illustrated in FIG. 2;
FIG. 9 illustrates a map display screen displayed on a touch-screen information terminal on a forklift in the map generation system illustrated in FIG. 2;
FIG. 10 illustrates an example of a map display screen on a browser on a display of a server in the map generation system illustrated in FIG. 2; and
FIG. 11 illustrates a map display screen indicating the delivery location of an object to be carried by a forklift, on a browser on the display of the server in the map generation system illustrated in FIG. 2.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In the embodiments described below, a map generation system 1 and an on-board computer 50 are an example of an information processing system and an example of an information processing apparatus, respectively. The map generation system 1 includes a forklift 10 as an example of a mobile body, first and second spherical cameras 20A and 20B as examples of first and second imaging devices, and the on-board computer 50. The first and second spherical cameras 20A and 20B may be collectively referred to as the spherical cameras 20 in the following description. In the drawings, identical or similar reference signs denote identical or similar elements, and redundant descriptions may be omitted.

The information processing apparatus generates an environment map based on captured images and estimates (determines) the position of a mobile body on which an imaging device is mounted while the mobile body moves. The mobile body may be a forklift, and the imaging device may be a wide-angle camera such as a spherical camera. The information processing apparatus generates an environment map of the site where the forklift 10 moves and determines the position of the forklift 10 based on images captured by the spherical camera 20 mounted on the forklift 10 while the forklift 10 moves along a predetermined route.

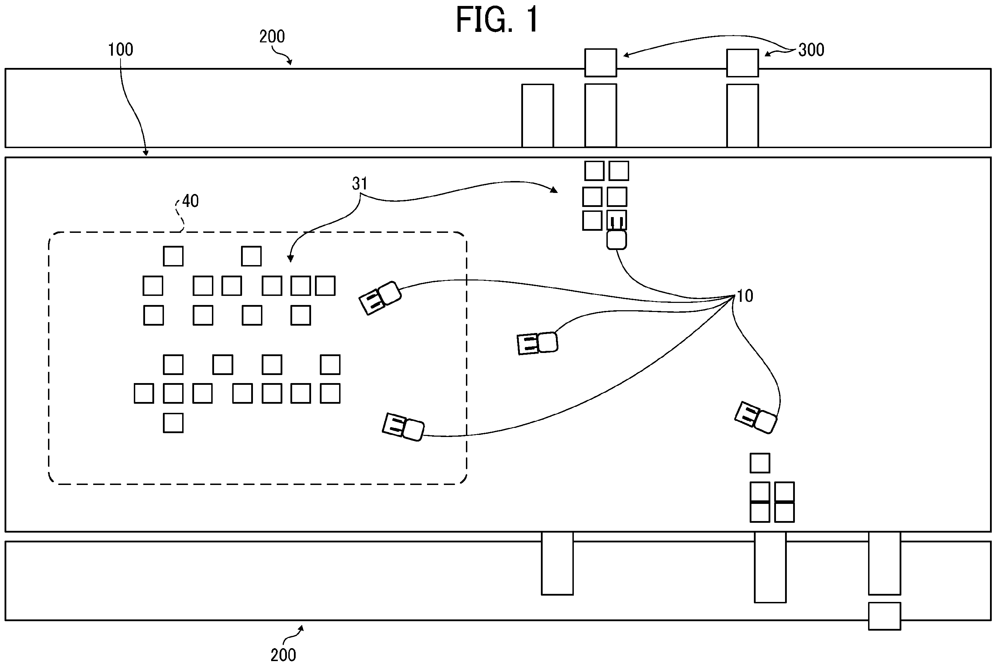

FIG. 1 is a diagram illustrating the generation of an environment map in a warehouse. FIG. 1 illustrates the inside of a warehouse 100 and the surroundings of the warehouse 100 as viewed from above (from the roof of the warehouse 100).

The warehouse 100 is a terminal warehouse situated at a transit point in transportation. Types of terminal warehouses include a so-called cross-docking warehouse. In a cross-docking warehouse, pallets of products are received from, for example, a factory or a wholesale company and temporarily stored. At the time of shipment, the packing styles of the pallets are not changed, and different types of pallets are combined and shipped by the region of the retail stores.

In FIG. 1, truck yards 200 are located around the warehouse 100. In FIG. 1, multiple containers 300 are carried by trailers and detached from the trailers in the truck yard 200, and the platforms of the trucks are linked to the warehouse 100. The forklifts 10 pick up pallets 31 from at least one of the platform of the truck arrived at the truck yard 200 or the container 300 carried by the trailer.

The forklift 10 carries the pallets 31 and temporarily stores the pallets 31 at a temporary storage location 40.

At the time of shipment, the forklift 10 carries the pallets 31 to a place in the warehouse 100 near one of the truck yards 200 and aligns the pallets 31. Then, the forklift 10 loads the pallets 31 onto a loading platform of a truck or one of the containers 300.

In the temporary storage location 40, sections are typically undefined on an individual product basis to flexibly allocate space because the types and quantities of products entering and leaving the temporary storage location 40 differ from day to day. On the other hand, since multiple workers temporarily store the pallets 31 in any desired locations, the worker searches for an intended pallet 31 from the temporarily stored pallets 31 at the time of shipment.

It is desired to track and visualize the locations of the pallets 31 in the warehouse 100 to facilitate the searching without sacrificing efficient use of the space by fixing the storage locations of the pallets 31. Further, to recognize and track the movements of the pallets 31 in the warehouse 100, it is desired to accurately determine the position of the forklift 10 and increase the accuracy in generating an accurate environment map of the warehouse 100. In particular, use of VSLAM to simultaneously perform self-localization and the generation of environment map information based on captured images is common to generate an environment map. The map generation system 1 uses an imaging device such as a spherical camera mounted on a mobile body such as the forklift 10, and performs self-localization and environment map generation, using VSLAM, based on images from the imaging device in such an environment as illustrated in FIG. 1.

For general technical information on VSLAM, see, for example, Tomono Masahiro, Yoshitaka Hara, "Current and Future Directions in SLAM," Systems, Control and Information, 2020, volume 64, No. 2, pp.45-50, and Sumikura, Shinya, Mikiya Shibuya, Ken Sakurada, "OpenVSLAM: A Versatile Visual SLAM Framework," MM '19: Proceedings of the 27th ACM International Conference on Multimedia, pp.2292-2295.

The map generation system 1 will be described below.

Overall configuration of Map Generation System 1

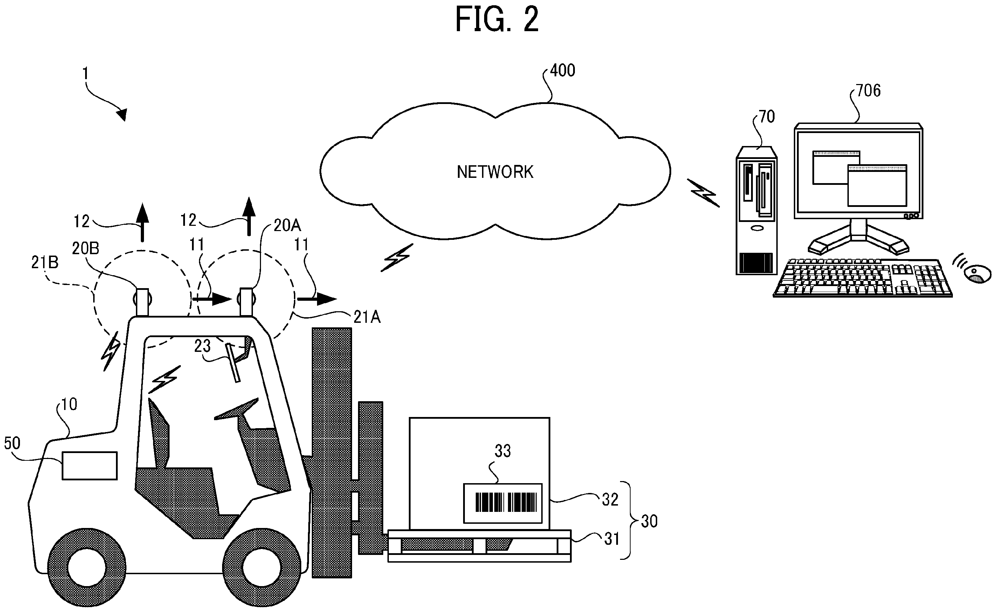

FIG. 2 is a diagram illustrating an overall configuration of the map generation system 1. As illustrated in FIG. 2, the map generation system 1 includes the forklift 10 as the mobile body, the two spherical cameras 20A and 20B as the imaging devices mounted on the mobile body, the on-board computer 50 as the information processing apparatus, and a touch-screen information terminal 23 (an information processing terminal) as a display device mounted on the mobile body. The map generation system 1 may also include a server 70 connected to the on-board computer 50 and the touch-screen information terminal 23 via a network 400. The on-board computer 50, the touch-screen information terminal 23, and the server 70 are connected to communicate via a network 400 such as a local area network (LAN). Other apparatuses or devices such as an external server or an image forming apparatus may be connected to the network 400 to communicate with the apparatuses or devices described above.

The forklift 10 is an example of the mobile body that holds the pallet 31 storing a cargo 32 and carries the pallet 31 and the cargo 32. The carrying by the mobile body is an example of movement by the mobile body. The pallet 31 and the cargo 32 are each an example of an object carried by the mobile body. The pallet 31 and the cargo 32 may be collectively referred to as objects 30 in the following description when not distinguished from each other. Further, the forklift 10 may refer to multiple forklifts, the pallet 31 may refer to multiple pallets, and the cargo 32 may refer to multiple cargoes.

The forklift 10 may carry the object 30 according to the operation by a worker or may carry the object 30 automatically without the intervention of a worker.

The spherical cameras 20 are examples of the imaging device mounted on the forklift 10. The two spherical cameras 20A and 20B are each a camera that captures a 360-degree omnidirectional image of the surroundings. The spherical cameras 20A and 20B capture images in directions 21A and 21B, respectively. In the description below, the two spherical cameras 20A and 20B are mounted on the forklift 10. Alternatively, three or more spherical cameras may be mounted on the forklift 10.

The spherical image (omnidirectional image) captured by the spherical camera 20 is an example of a captured image. The use of the spherical camera 20 facilitates the generation of, for example, a passage map in an environment map to be used for forward travel and return travel without having to travel back and forth through the passages. The imaging device is not limited to the spherical camera 20 but may be another wide-angle camera, a camera having a normal angle of view, or any imaging device that captures an image of the surroundings of the forklift 10. The captured image is not necessarily a spherical image or omnidirectional image.

The spherical image includes a captured image of the object 30 as viewed in a conveyance direction 11 from the forklift 10 and a view in a vertically upward direction 12 as viewed from the forklift 10. The conveyance direction 11 is in front of the forklift 10, and the vertically upward direction 12 is above the forklift 10. Since the spherical camera 20 captures omnidirectional images, areas in front of or above the forklift 10 is included in a single image. The conveyance direction 11 is an example of a moving direction.

The spherical camera 20 is preferably mounted on the roof of the forklift 10. This ensures a good field of view for capturing images of the areas in front of and above the forklift 10.

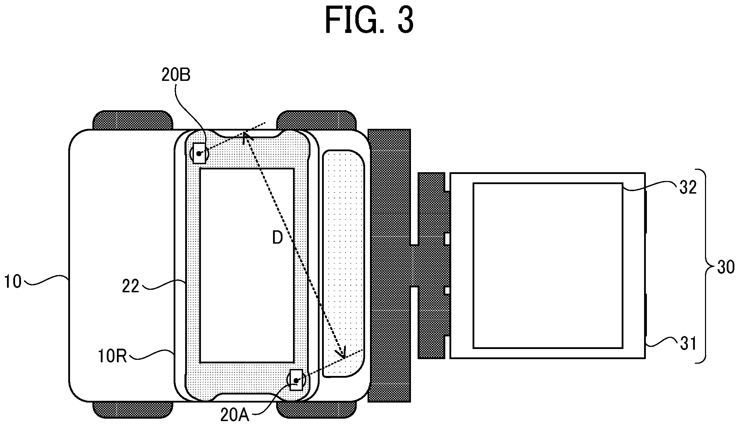

FIG. 3 is a schematic diagram illustrating how the two spherical cameras 20A and 20B are mounted to the forklift 10 in the map generation system 1. As illustrated in FIG. 3, the two spherical cameras 20A and 20B are mounted on a roof 10R of the forklift 10. The roof 10R of the forklift 10 is provided with a camera-mount roof carrier 22. At the diagonal ends of the camera-mount roof carrier 22, fixtures such as screws for fixing the positional relationship between the two spherical cameras 20 are attached. For example, screws that fit into screw holes for mounting the tripod of the spherical camera 20 are used. By attaching the spherical cameras 20A and 20B to the fixture such as screws, a distance D (reference distance) between the spherical cameras 20A and 20B is determined.

In this manner, the spherical cameras 20A and 20B are respectively disposed spaced apart at the first end and the second end of the installation surface on the forklift 10. The installation surface is, for example, the roof 10R. In addition, the spherical cameras 20A and 20B are spaced apart from each other in a direction perpendicular to the moving direction of the forklift 10 (lateral direction or vertical direction relative to the front-rear direction). In FIG. 3, the spherical cameras 20A and 20B are spaced apart in the lateral direction.

Referring back to FIG. 2, the spherical cameras 20 each have a wireless or wired communication function and transmits the captured spherical image to the on-board computer 50. The on-board computer 50 transmits the results of processing based on the captured spherical image to the touch-screen information terminal 23.

The touch-screen information terminal 23 is an information processing terminal including a display and mounted on the mobile body. The touch-screen information terminal 23 displays the environment map generated by the map generation system 1 on the touch screen.

The touch-screen information terminal 23 has a wireless communication function, receives an environment map from the on-board computer 50, and outputs the environment map as an image on its display. Alternatively, the touch-screen information terminal 23 may receive an environment map from the server 70 as described below. Examples of the touch-screen information terminal 23 include a tablet communication terminal and a small liquid crystal display having a touch screen sensor.

The on-board computer 50 may directly transmit the result of processing based on the captured spherical image to the server 70 through the network 400. Alternatively, when the on-board computer 50 is not directly connected to the network 400, the on-board computer 50 may transmit the result to the server 70 via the touch-screen information terminal 23 through the network 400. The server 70 collects position information from the multiple forklifts 10 and centrally manages the position information. The environment map can also be displayed on a display 706 (e.g., a liquid crystal display) that is included in the server 70 or connected to the server 70.

The cargo 32 bears a barcode 33 as an example of identification information identifying the cargo 32. Such a barcode may be indicated on the pallet 31 and used as identification information identifying the pallet 31. The barcode 33 is read by a reader such as a barcode reader, and the identification information obtained from the reading is transmitted to the on-board computer 50. The identification information is not limited to a barcode but may be a quick response code (QR CODE) or an identifier (ID) number.

The on-board computer 50 is an example of the information processing apparatus that generates an environment map of the warehouse 100 and determines the position information of the forklift 10 (i.e., estimates the position of the forklift 10 and generates the position information thereof). The on-board computer 50 may be mounted on the forklift 10 and process position information of the object 30 carried by the forklift 10. The on-board computer 50 processes the position information of the object 30 based on the position information of the forklift 10 and the identification information of the object 30.

Hardware Configuration of On-Board Computer 50

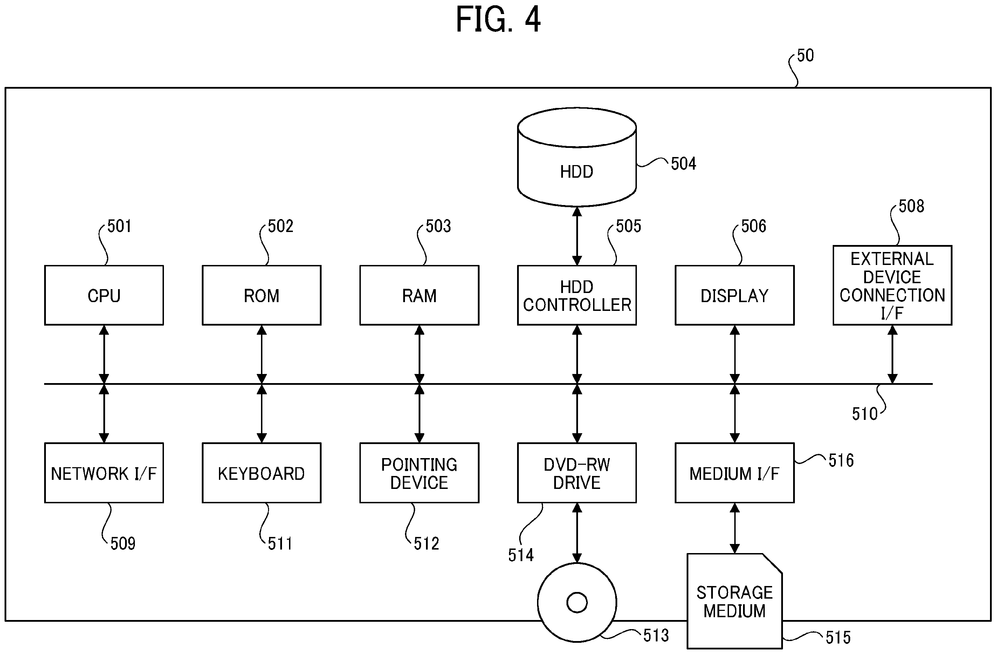

FIG. 4 is a block diagram illustrating a hardware configuration of the on-board computer 50. The on-board computer 50 is, for example, a general-purpose computer.

As illustrated in FIG. 4, the on-board computer 50 includes a central processing unit (CPU) 501, a read-only memory (ROM) 502, a random-access memory (RAM) 503, a hard disk (HD) 504, a hard disk drive (HDD) controller 505, and a display 506. The on-board computer 50 further includes an external device connection interface (I/F) 508, a network I/F 509, a bus line 510, a keyboard 511, a pointing device 512, a digital versatile disc rewritable (DVD-RW) drive 514, and a medium I/F 516.

The CPU 501 controls the entire operation of the on-board computer 50. The ROM 502 stores programs such as an initial program loader (IPL) used for driving the CPU 501. The RAM 503 is used as a work area for the CPU 501.

The HD 504 stores various data such as programs. The HDD controller 505 controls an HDD to read and write various data from and to the HD 504 under the control of the CPU 501. The display 506 displays various information such as a cursor, a menu, a window, a character, or an image. The display 506 displays an environment map as described above.

The external device connection I/F 508 is an interface for connecting to various external devices. Examples of the external device include, but are not limited to, a universal serial bus (USB) memory and a printer. The network I/F 509 is an interface for performing data communication through the network 400. The bus line 510 may be an address bus or a data bus to electrically connect various elements such as the CPU 501 illustrated in FIG. 4.

The keyboard 511 is a kind of input device provided with multiple keys for inputting, for example, characters, numerals, and various instructions. The pointing device 512 is a kind of input device used to, for example, select various instructions, execute various instructions, select a target for processing, and move a cursor. The DVD-RW drive 514 controls the reading or writing of various types of data to or from a DVD-RW 513, which is an example of a removable storage medium. The removable storage medium is not limited to a DVD-RW and may be, for example, a DVD-recordable (DVD-R). The medium I/F 516 controls the reading or writing (storing) of data from or to a storage medium 515 such as a flash memory.

In the above description, the on-board computer 50 includes the display 506, the keyboard 511, the pointing device 512, and the DVD-RW drive 514. Alternatively, a part of the components illustrated in FIG. 4 including these may be omitted. Further, the on-board computer 50 may include another component other than those illustrated in FIG. 4. The hardware configuration of the on-board computer 50 described above with reference to FIG. 4 is applicable to the touch-screen information terminal 23 mounted on the forklift 10 and the server 70 connected via a network with addition or deletion of components as necessary.

Functional Configuration of Map Generation System 1

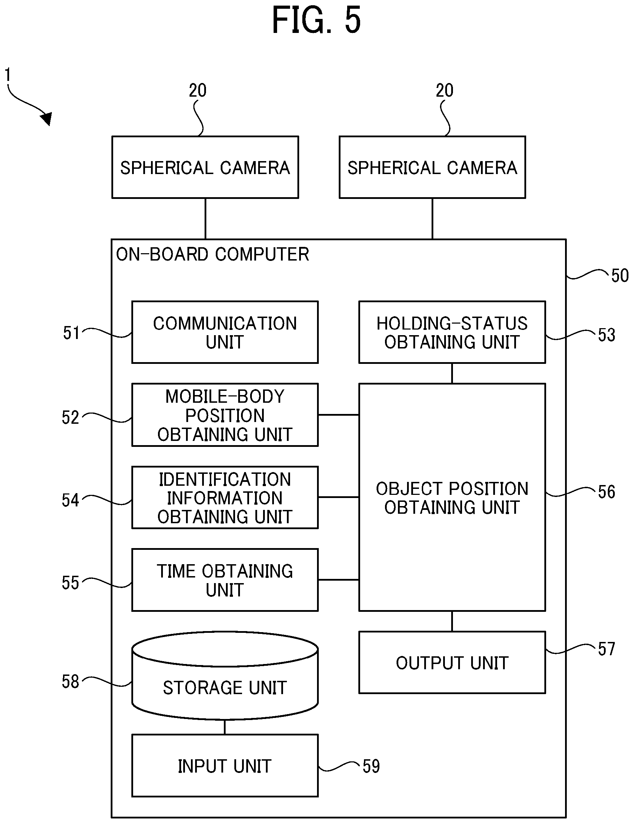

FIG. 5 is a block diagram illustrating a functional configuration of the map generation system 1. As illustrated in FIG. 5, the on-board computer 50 includes a communication unit 51, a mobile-body position obtaining unit 52, a holding-status obtaining unit 53, an identification information obtaining unit 54, a time obtaining unit 55, an object position obtaining unit 56, an output unit 57, a storage unit 58, and an input unit 59.

Each of these units is a function or means implemented by or caused to function by one or more of the hardware elements illustrated in FIG. 4 operating in accordance with instructions from the CPU 501 according to a program loaded onto the RAM 503 from the HD 504. The storage unit 58 includes a storage area provided by, for example, the HD 504 or the RAM 503.

The two spherical cameras 20A and 20B are connected to the on-board computer 50.

The on-board computer 50 receives the spherical images captured by the spherical cameras 20A and 20B. Based on the spherical images, the on-board computer 50 generates an environment map depicting the surrounding environment in which the forklift 10 moves and determines the position information of the forklift 10. The on-board computer 50 further obtains the position information of the object 30 based on the position information of the forklift 10 and holding-status information that indicates whether the forklift 10 is holding the object 30. The on-board computer 50 then outputs the determined position information of the forklift 10, the generated environment map, and the obtained position information of the object 30 to an external device via the output unit 57.

The communication unit 51 receives the spherical images captured by the spherical cameras 20A and 20B and outputs the spherical images to the mobile-body position obtaining unit 52 and the holding-status obtaining unit 53. The communication unit 51 further receives the identification information read by a reader such as a barcode reader via the network 400 and outputs the identification information to the identification information obtaining unit 54. The communication unit 51 may receive information (such as commands) from the server 70 via the network 400. The communication unit 51 may transmit the result of processing performed by the forklift 10 to the server 70 via the network 400.

The mobile-body position obtaining unit 52 determines (calculates) the position of the forklift 10 based on multiple spherical images that are consecutively input, generates an environment map depicting the surrounding environment in which the forklift 10 moves, and stores the environment map and position information in the storage unit 58. The input unit 59 receives the reference distance D between the two spherical cameras 20A and 20B measured or given in advance as a parameter used in generating a map, and stores the reference distance D in the storage unit 58. The reference distance D is the inter-camera external parameter translation amount. The reference distance D between the two spherical cameras 20A and 20B is an actual measurement value of the straight-line distance between the spherical cameras 20A and 20B measured with a tape measure or a laser rangefinder, or the design value of the straight-line distance between, for example, the screw holes positions of the above-mentioned camera-mount roof carrier 22.

The generated environment map and the determined position information may be output via the output unit 57. The output destination of the output unit 57 is the touch-screen information terminal 23 of the forklift 10, and the information may be displayed on the touch-screen information terminal 23. The mobile-body position obtaining unit 52 also outputs the calculated position information of the forklift 10 to the object position obtaining unit 56. Alternatively, the output destination may be an external device such as a personal computer (PC) connected to the on-board computer 50, a display device such as the display 506, or a storage device such as the HD 504. The generated environment map and the calculated position information may be transmitted by the communication unit 51 to the server 70 via the network 400.

The holding-status obtaining unit 53 obtains the holding-status information indicating whether the forklift 10 is holding the object 30 by the calculation based on the input spherical images, and outputs the holding-status information to the object position obtaining unit 56. The images from either one of the spherical cameras 20A and 20B may be used in this calculation.

The identification information obtaining unit 54 receives the identification information from the communication unit 51 and outputs the identification information to the object position obtaining unit 56. However, the manner in which the identification information obtaining unit 54 obtains the identification information is not limited to the reception via the network 400. For example, the identification information obtaining unit 54 may obtain the identification information input by the user using the keyboard 511 or the pointing device 512 in FIG. 4, the identification information pre-stored in the storage unit 58, or the identification information received via the external device connection I/F 508.

The time obtaining unit 55 obtains information indicating the time of receipt of the spherical image and that of the identification information and outputs the information to the object position obtaining unit 56.

The object position obtaining unit 56 obtains the position information of the object 30 based on the position information of the forklift 10 and the holding-status information. Further, the object position obtaining unit 56 may output the position information of the object 30, the identification information identifying the object 30, and the time information via the output unit 57 in a mutually associated manner.

The storage unit 58 stores parameters used for generating the map, the determined position information of the forklift 10, the generated environment map, and identification information identifying the object 30 such as the pallet 31 or the cargo 32.

Details of Map Generation Function of Map Generation System 1

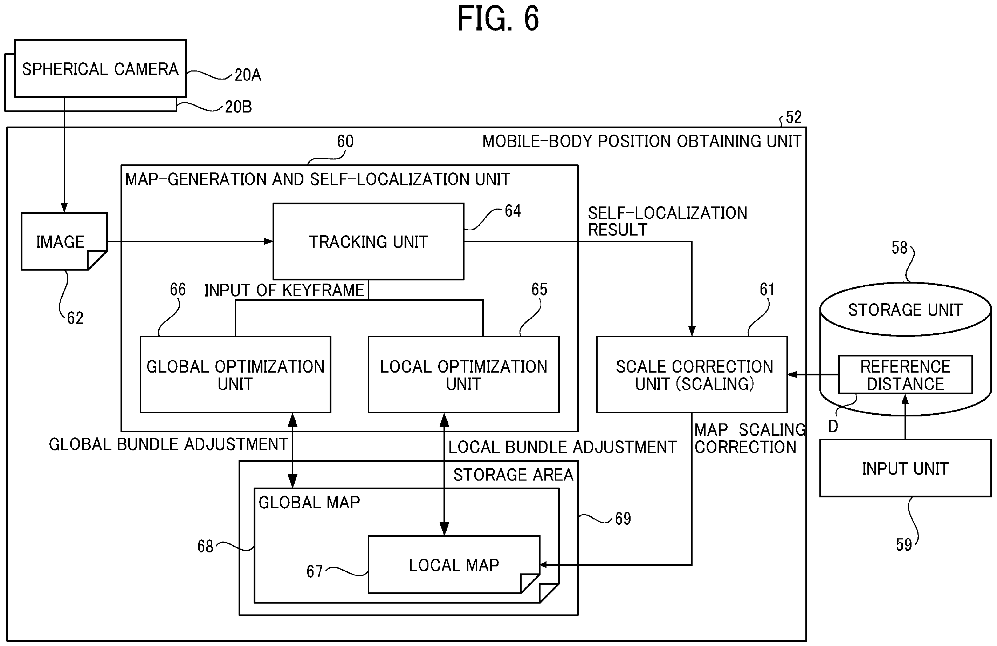

FIG. 6 is a block diagram illustrating a detailed functional configuration relating to the mobile-body position obtaining unit 52 of the map generation system 1.

The mobile-body position obtaining unit 52 determines the position of the forklift 10 and generates environment map information based on the multiple spherical images consecutively received from the spherical camera 20 and the parameter read from the storage unit 58.

The determined position will be described assuming that the positions of the two spherical cameras 20A and 20B are fixed relative to the forklift 10 and the position of one of the spherical cameras 20A and 20B is used as the position of the forklift 10. The position of the forklift 10 is not limited thereto. For example, the average of the gravitational centers of the spherical cameras 20A and 20B may be used as the position of the forklift 10. In the following description, the position of the forklift 10 (or the spherical camera 20) determined by the mobile-body position obtaining unit 52 may be referred to as a self-position.

The mobile-body position obtaining unit 52 includes a map-generation and self-localization unit 60 and a scale correction unit 61.

The map-generation and self-localization unit 60 generates an environment map based on the multiple images (image sequence) captured by the spherical camera 20A or 20B and consecutively received while the forklift 10 moves along a predetermined route. Either one of the spherical camera 20A or 20B is used to generate the environment map. The route of the forklift 10 typically starts from a designated start point, passes through multiple checkpoints, and continues to a designated end point. The route of the forklift 10 may include a revisit point that is visited multiple times and may also contain a loop closure where the route forms a complete circuit connecting multiple checkpoints. The map-generation and self-localization unit 60 also determines the self-positions of the two spherical cameras 20A and 20B based on images (image pair) captured by the two spherical cameras 20A and 20B.

More specifically, the map-generation and self-localization unit 60 includes a tracking unit 64, a local optimization unit 65, and a global optimization unit 66.

The tracking unit 64 detects a key point in all the frames consecutively input, performs key point matching and posture optimization, and determines the posture of the spherical camera 20 from which the frames are received. The tracking unit 64 also performs a key frame determination to determine whether to insert a new key frame. When registering a new key frame, the tracking unit 64 outputs the key frame to be registered to the local optimization unit 65 and the global optimization unit 66. The self-localization result is output to the scale correction unit 61.

The local optimization unit 65 optimizes the frames near the latest frame. The local optimization unit 65 uses the inserted key frame to triangulate the points in a three-dimensional coordinate system, thereby generating and extending the map. The local optimization unit 65 further performs local bundle adjustment. A partial map around the key frame is referred to as a local map 67.

If loop closure is usable in the travel area for which the map is generated, it is preferable to perform loop closure by setting a revisit point in the route of the forklift 10 to eliminate distortion of the map. The global optimization unit 66 performs global optimization by utilizing loop closure. The global optimization unit 66 performs loop detection, posture (pose) graph optimization, and global bundle adjustment. This optimization minimizes the distortion of the map as a whole. The overall map obtained so far is referred to as a global map 68.

As described above, either the spherical camera 20A or 20B is used to generate environment maps (the local map 67 and the global map 68) depicting the surrounding environment in which the forklift 10 moves. Once the environment maps (67, 68) are generated, the map-generation and self-localization unit 60 can determine the self-position of the forklift 10 based on the images captured by the two spherical cameras 20A and 20B by only performing tracking without generating a map.

When environment maps (67, 68) are generated based on the time series of the spherical images captured by either of the spherical camera 20A or 20B along the route moved by the forklift 10, the map-generation and self-localization unit 60 serves as an environment map generation unit. The generated environment maps (67, 68) are held in a storage area 69 of a memory such as the HD 504 or the RAM 503. The environment maps (67, 68) are stored in the storage unit 58 at desired timing and read out to be loaded to the storage area 69, for example, when the on-board computer 50 is started up. The storage area 69 in which the environment maps (67, 68) are stored serves as a storage area or memory. Further, when determining the position of the spherical camera 20A or 20B on the environment map (67, 68) generated based on the spherical images captured by either the spherical camera 20A or 20B, the map-generation and self-localization unit 60 serves as a first self-localization unit or a second self-localization unit.

The spherical camera 20 has multiple optical systems and has an omnidirectional field of view but is unlike a stereo camera. An image captured by the spherical camera 20 are equivalent to a monocular image captured by a monocular camera. A monocular image refers to an image captured from one viewpoint by a monocular camera and is different from an image captured by a stereo camera. Accordingly, in the environment map (the local map 67 and the global map 68) generated by the map-generation and self-localization unit 60 using either of the spherical cameras 20A and 20B, the distance unit is unknown. Then, scale correction is performed to convert a position or distance on the environment map into a position or distance in real space.

The scale correction unit 61 calculates a correction coefficient (scale coefficient) for correcting the scale of the environment maps (67, 68) based on a predetermined parameter. As described above, the correction coefficient is calculated using the self-localization results of the two spherical cameras 20A and 20B on the same map generated based on two images respectively captured by the spherical cameras 20A and 20B. The self-localization result is obtained based on spherical images (image pair) captured by the two spherical cameras 20A and 20B at approximately the same time. More specifically, the scale correction unit 61 calculates a correction coefficient (a scale coefficient $\alpha$) based on a virtual distance between the spherical cameras 20 and the reference distance D between the two spherical cameras 20A and 20B given in advance and stored in the storage unit 58. The virtual distance between the spherical cameras 20 is calculated based on the position information of one spherical camera 20 (e.g., 20A) and position information of the other spherical camera 20 (e.g., 20B) on the same map, preferably at the same time (within a predetermined time range).

The coordinate positions of the two spherical cameras 20A and 20B on the same map (same coordinate system) are represented as $P_1$ $(x_1, y_1, z_1)$ and $P_2$ $(x_2, y_2, z_2)$. Then, a Euclidean distance (virtual distance) d between the two spherical cameras 20A and 20B on the same map is calculated by the following expression:

Expression 1

$$d = \sqrt{(x_1 - x_2)^2 + (y_1 - y_2)^2 + (z_1 - z_2)^2}.$$

Since the distance d in the map coordinate system corresponds to the distance D in the real space, the distance on the coordinate system is converted into the distance in the real space by determining the scale coefficient $\alpha$ that satisfies the following relational expression:

Expression 2

$$D = \alpha \times d$$

As described above, the reference distance D between the two spherical cameras 20A and 20B is given in advance as an actual measurement value or a design value via the input unit 59 and is stored in the storage unit 58 as the reference distance D. The scale correction unit 61 serves as a correction unit that generates the scale coefficient $\alpha$ as information for correcting the scale of the environment map based on the virtual distance d between a first self-position ($P_1$ $(x_1, y_1, z_1)$) and a second self-position ($P_2$ $(x_2, y_2, z_2)$) on the same environment map (67, 68) and the reference distance D read from the storage unit 58. The scale correction unit 61 may generate an environment map corresponding to the actual distance by applying the generated scale coefficient $\alpha$ to each of a set of three-dimensional coordinate points (including the coordinates of the key frame) contained in the environment maps (67, 68).

Map Generation and Position Estimation by On-Board Computer

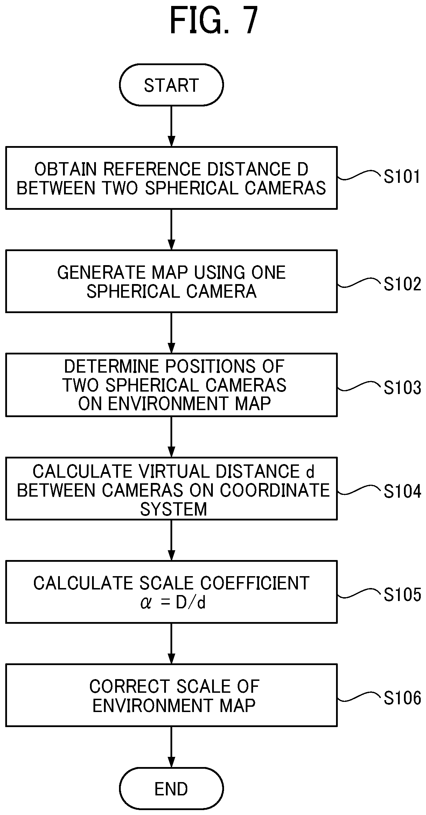

FIG. 7 is a flowchart of a map generation and position determination process performed by the on-board computer 50 of the map generation system 1. The process illustrated in FIG. 7 is executed by the on-board computer 50 in response to receiving an instruction to start generating a map. The instruction to start generating a map may be transmitted to the on-board computer 50 in response to, for example, a start operation performed on the touch-screen information terminal 23 by the operator of the forklift 10 used in map generation. Alternatively, when the forklift 10 is an unmanned guided vehicle that autonomously drives, the instruction to start generating a map may be transmitted to the on-board computer 50 via the network 400 in response to an operation to start the autonomous operation performed, for example, on the server 70, by a person who supervises the autonomous operation.

As a preliminary preparation for the process illustrated in FIG. 7, the two spherical cameras 20A and 20B are mounted on the forklift 10, the reference distance D between the two spherical cameras 20A and 20B is input via the input unit 59 and stored in the storage unit 58. It is assumed that, before the start of the process, the forklift 10 is parked at a predetermined start point in the area for which the map is generated. In the map generation, environment maps (67, 68) are generated based on this start point.

In FIG. 7, at step S101, the on-board computer 50 reads (obtains) the reference distance D between the two spherical cameras 20A and 20B from the storage unit 58 as the correction parameter.

In step S102, the map-generation and self-localization unit 60 of the on-board computer 50 generates an environment map along the travel route of the forklift 10 using one of the spherical cameras 20A and 20B (the spherical camera 20A in the following description). For example, the operator starts moving the forklift 10 along the predetermined route. Alternatively, in the case of autonomous driving, the forklift 10 starts moving according to a predetermined algorithm. In response to the end of moving the entire route by the forklift 10, the map-generation and self-localization unit 60 of the on-board computer 50 ends map generation. The environment map is stored in the storage area 69. The forklift 10 moves along all possible routes within the work area in the map generation. As the forklift 10 moves along the route, spherical images are captured by the spherical camera 20A and consecutively input to the on-board computer 50. The distance unit of the map obtained at this stage is unknown.

In step S103, the map-generation and self-localization unit 60 of the on-board computer 50 reads the environment map from the storage area 69 and, at any desired time, determines the positions $P_1$ $(x_1, y_1, z_1)$ and $P_2$ $(x_2, y_2, z_2)$ of the spherical cameras 20A and 20B in the same coordinate system on the environment map based on the spherical images respectively captured by the spherical cameras 20A and 20B at that time and the environment map generated in step S102.

In step S104, the scale correction unit 61 of the on-board computer 50 calculates the virtual distance d between the positions $P_1$ $(x_1, y_1, z_1)$ and $P_2$ $(x_2, y_2, z_2)$) of the two spherical cameras 20A and 20B on the environment map.

In step S105, the scale correction unit 61 of the on-board computer 50 calculates the scale coefficient $\alpha$ of the environment map based on the virtual distance d and the reference distance D between the spherical camera 20A and the spherical camera 20B given in advance.

In step S106, the scale correction unit 61 of the on-board computer 50 corrects the scale of the environment maps (67, 68) generated in step S102 using the calculated scale coefficient $\alpha$, thereby generating a scale-corrected environment map. More specifically, in step S106, the scale coefficient $\alpha$ calculated in step S 105 is applied to each piece of coordinate information included in the environment map. The coordinates on the environment map are converted to meters by multiplying the coordinate information of the point cloud and the coordinate information included in the key frame by the scale coefficient $\alpha$. Consequently, the self-localization results calculated using the map are also converted to meters. Then, the process in FIG. 7 ends.

Correction of Map

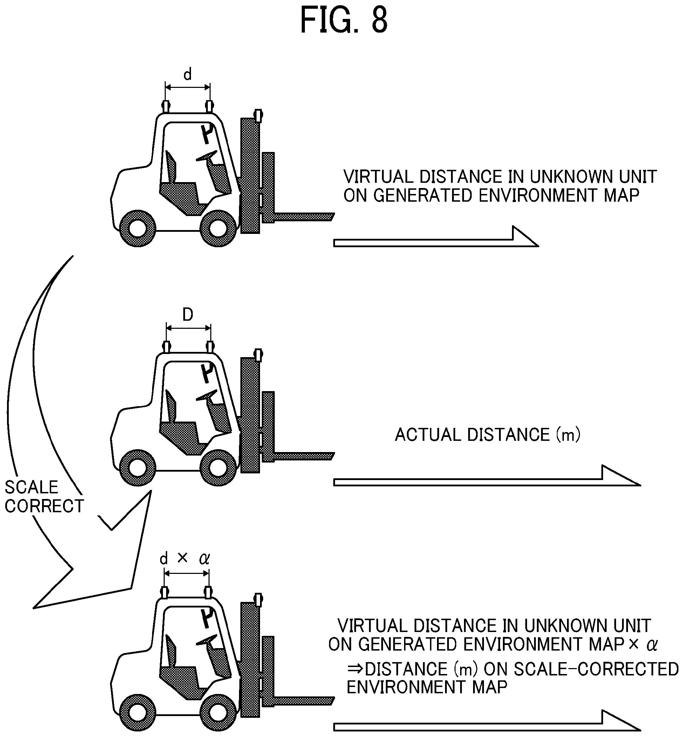

A process for correcting the scale of an environment map in which the distance unit is unknown to generate an environment map in a predetermined distance unit will be described below with reference to FIG. 8.

As described above, the distance on the VSLAM system (map) generated by a monocular camera deviates from the actual distance because the distance unit is unknown. To solve this, the scale is corrected. In the present embodiment, it is assumed that the distance between the two spherical cameras 20A and 20B is known and stored in the storage unit 58.

On the environment maps (67, 68) generated by the map-generation and self-localization unit 60 using a single spherical camera 20, the distance unit is unknown. However, some distance (the virtual distance d) is defined in the distance between the two spherical cameras 20A and 20B determined using the environment map and the images respectively captured by the two spherical cameras 20A and 20B. The scale correction unit 61 calculates the scale coefficient $\alpha$ for converting a virtual distance (virtual distance d), in an unknown unit, between the position of the spherical camera 20A and the position of the spherical camera 20B on the environment map (67, 68) into the reference distance D between the spherical cameras 20A and 20B.

The environment map generated (by VSLAM) by the map-generation and self-localization unit 60 described above includes a set of points on a three-dimensional coordinate system in which the distance unit is unknown. The scale correction unit 61 applies the scale coefficient $\alpha$ to each of the set of points included in the three-dimensional coordinate system (including the coordinates of the key frame) to generate an environment map corresponding to the actual distance.

In the above description, the scale coefficient $\alpha$ can be calculated with at least one pair of the determined

positions ($P_1$, $P_2$) of the two spherical cameras 20A and 20B at any given time. However, the scale coefficient $\alpha$ may be calculated by performing statistical processing using the time-series pairs of determined positions ($P_1(0)$, $P_2(0)$, $P_1(1)$, $P_2(1)$, ..., $P_1(t)$, $P_2(t)$) of the two spherical cameras 20A and 20B at multiple time points.

For example, the scale coefficient $\alpha$ that minimizes the sum of squared errors is calculated.

In the description above, after the environment maps (67, 68) are generated, spherical images are captured again by the two spherical cameras 20A and 20B at any time point, the positions of the spherical cameras 20A and 20B are determined based on the captured images, and the scale coefficient $\alpha$ is calculated. However, the image used for calculating the scale coefficient $\alpha$ is not limited. Alternatively, one or multiple pairs of spherical images captured at one or more time points while the environment map is generated may be held and used for calculating the scale coefficient $\alpha$.

In the description above, the scale coefficient $\alpha$ is applied to the environment map (67, 68) in which the distance unit is unknown to generate an environment map corresponding to the actual distance. In this case, use of a corrected environment map corresponding to the actual distance allows the map-generation and self-localization unit 60 to determine the self-position (the position of the forklift 10 or the spherical camera 20) based on the actual distance. Alternatively, the scale coefficient $\alpha$ may be applied as follows. Parallel to the determination of the self-position using an environment map whose distance unit is unknown, the scale coefficient $\alpha$ is calculated, using the two spherical cameras 20A and 20B, each time the self-position is determined on the environment map whose distance unit is unknown, and the self-position is converted into the position or distance in real space by applying the current scale coefficient $\alpha$. Further, although the position determined on the corrected environment map consistent with the actual distance corresponds to the actual distance, the latest scale coefficient $\alpha$ may be calculated to cope with the change with time. Specifically, the latest scale coefficient $\alpha$ ("1" in an ideal situation without an error) at that time is calculated based on the determined distance (having been converted to a reasonable actual distance) between the positions of the two spherical cameras 20A and 20B and applied to the self-position determined on the corrected environment map.

Visualization of Scale-corrected Map

The following describes how to visualize the scale-corrected environment map on a designed layout map. A scale-corrected environment map is a collection of points (point cloud) on a three-dimensional coordinate system. To visualize the point cloud on a two-dimensional map, the point cloud is projected onto an XZ plane (horizontal plane) in a camera coordinate system such that the point cloud map becomes an overhead view, thereby generating image data that serves as a point-cloud-based orthogonal drawing. The orthogonal drawing refers to a drawing that has been orthogonally transformed into an image in which each point is positioned at the correct position (i.e., the distance between two points is correct) without a tilt, as if viewed from directly above.

The orthographic drawing generated above is fitted with the designed layout map information of the work area. Specifically, the scale-corrected environment map is appropriately scaled up or down, and rotated, translated, or rotated and translated, so that the self-localization results are overlaid and visualized on the design drawing.

The position of the forklift 10 indicated on the designed layout map is preferably output to the touch-screen information terminal 23 mounted on the forklift 10.

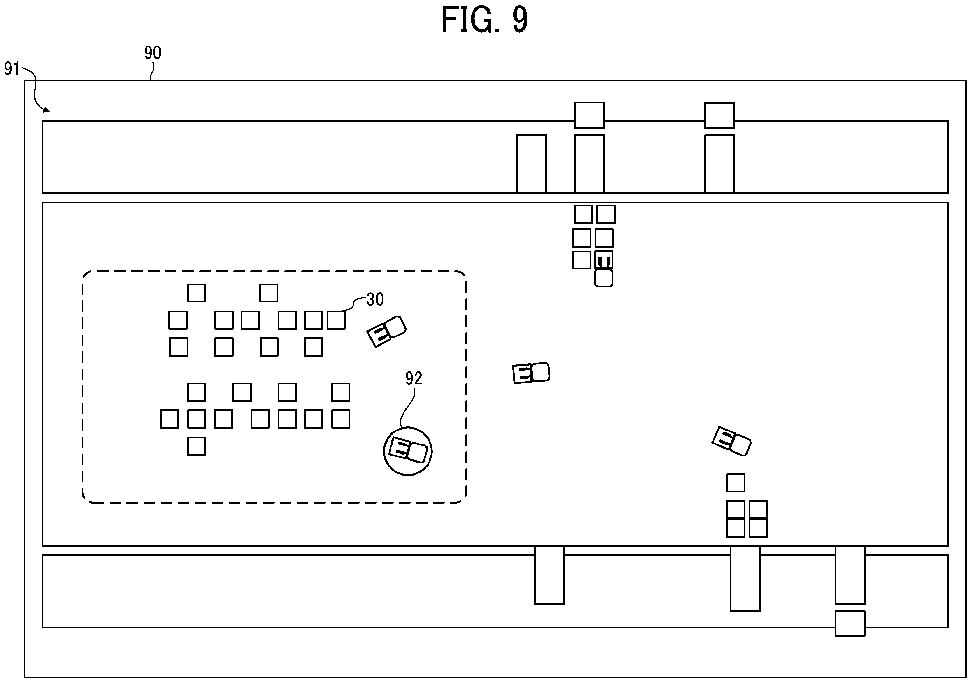

FIG. 9 illustrates a map display screen 90 displayed on the touch-screen information terminal 23 of the forklift 10. In the map display screen illustrated in FIG. 9, a position 92 of the forklift 10 and the positions of objects 30 such as cargos and pallets are displayed on a designed layout map 91.

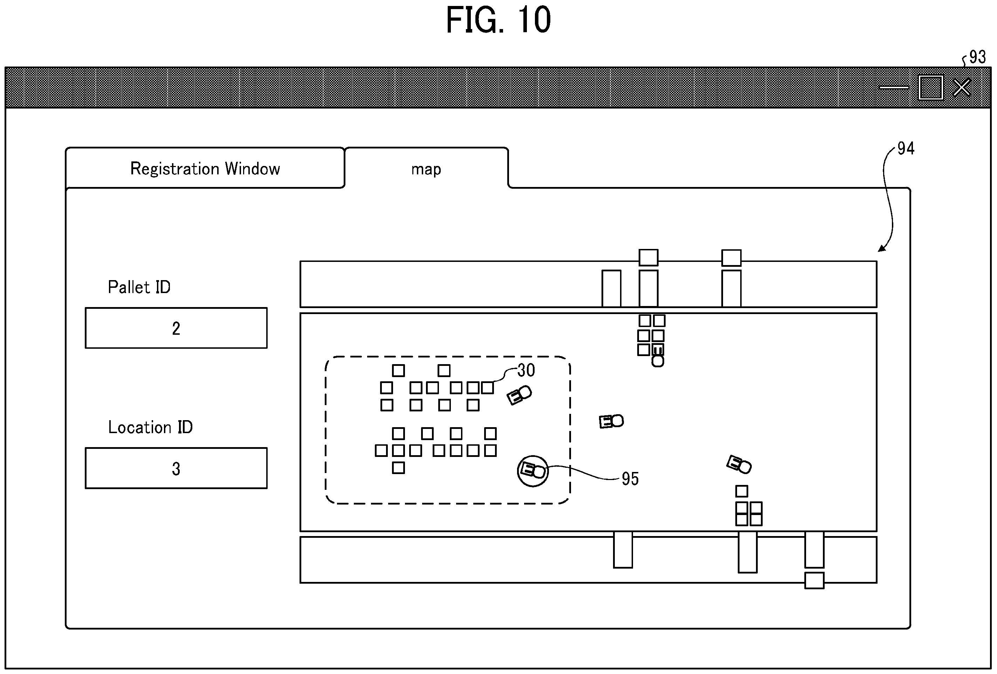

FIG. 10 illustrates a map display screen 93 displayed on the browser of the display 706 of the server 70. The map display screen 93 illustrated in FIG. 10 also indicates a position 95 (self-position) of the forklift 10 and the positions of objects 30 such as cargos and pallets on a designed layout map 94.

The method for visualizing and displaying the scale-corrected environment map on the designed layout is not limited to the method described above with reference to FIGS. 9 and 10.

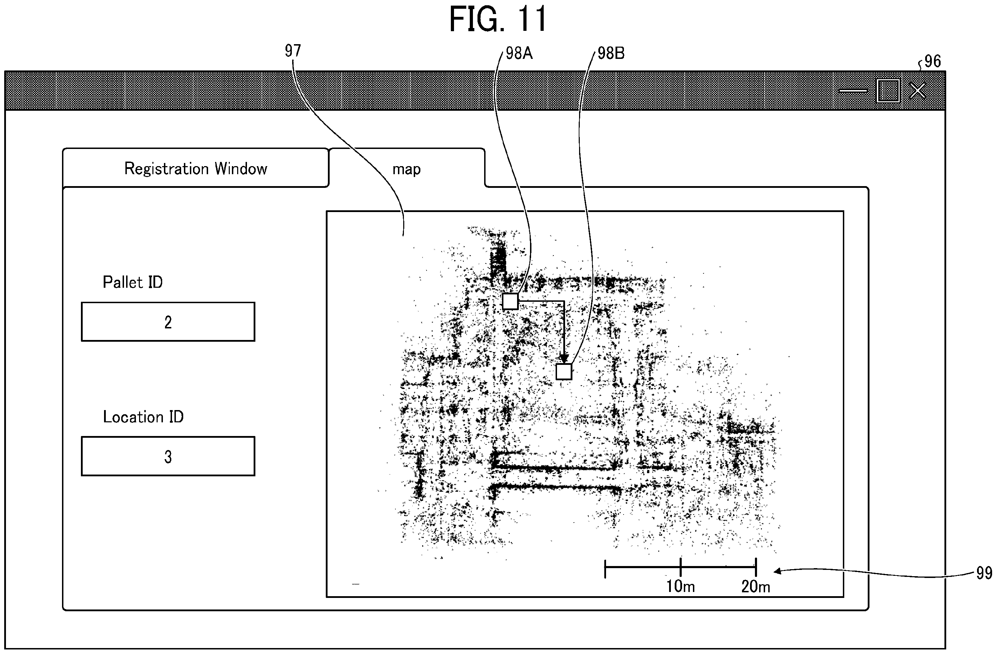

For example, a scale-corrected environment map can be displayed as a point-cloud-based orthogonal image data with a scale bar indicating the distance unit. FIG. 11 illustrates a display screen 96 that indicates the delivery location of the object 30 carried by the forklift 10 and is displayed on the browser on the display 706 of the server 70. The display screen 96 displays a location map 97. The location map 97 includes a pickup location 98A and a delivery location 98B. The pickup location 98A indicates the position from which an object is carried, and the delivery location 98B indicates the destination to which the object is carried. By displaying the temporary storage location, etc. on the screen, the displayed information facilitates the work. Further, a scale bar 99 is illustrated in FIG. 11. The scale bar 99 is an example of a graphical user interface (GUI) element that is displayed together with a scale-corrected environment map and indicates the scale of the displayed environment map.

The location map 97 illustrated in FIG. 11 is generated by the mobile-body position obtaining unit 52 based on the spherical images captured by the spherical camera 20. The location map 97 is generated by projecting the point cloud containing the obtained three-dimensional coordinate information onto a two-dimensional plane. Although there may be multiple forklifts 10, the location map 97 may be generated according to the movement of one forklift 10 and used to obtain the information on the positions of all the forklifts 10. Then, the individual positions of the forklifts 10 can be indicated in the same coordinate system.

Movement across Different Spaces

In the description above, the entire environment maps (67, 68) generated using one of the spherical cameras 20 have a common scale although the distance unit is unknown. This assumption is preferably satisfied in generating a map of space within a single room. By contrast, in the case of movement between rooms, the scale (first space) of the portion of the environment map generated in one room may differ from the scale (second space) of the portion of the environment map generated in another room. In that case, although the entire environment map is one continuous map, the map is partly distorted. This is because a key point common to both rooms is not found when movement across multiple rooms occurs.

This inconvenience can be addressed as follows. The scale of the portion of the environment map generated in the first space and the scale of the portion of the environment map generated in the second space can be corrected to be consistent with each other based on the determination that the distance between the two spherical cameras 20A and 20B should be equal between in the portion of the environment map generated in the first space and the portion of the environment map generated in the second space.

For example, the environment map is divided into sections corresponding to individual spaces, and a scale coefficient is set for each section. In this case, in self-localization, the distance can be converted using different scale coefficients depending on the section in which the mobile body is determined to be currently located. Alternatively, for an environment map with an unknown distance unit, the scale of each space can be corrected using the corresponding scale coefficient. Furthermore, whether the map extends across two spaces with different scales as described above is determined from the threshold value for the change in the calculated scale coefficient $\alpha$. For example, the scale coefficient $\alpha$ is monitored, and, when the change in the scale coefficient $\alpha$ exceeds a threshold, the map is divided into sections such that the boundary of the section passes through the position where the change is detected.

Simultaneous Map Generation and Scale Correction

In the description above, the map-generation and self-localization unit 60 generates an environment map using images captured by one spherical camera 20 while the forklift 10 moves along the route. After that, when the forklift 10 is located at any desired position, the map-generation and self-localization unit 60 determines the self-position and the scale correction unit 61 generates correction information (i.e., calculates the correction coefficient) using the two spherical cameras 20A and 20B, without describing the map. However, the order of the processes is not limited to the above.

Alternatively, the generation of the environment map by the map-generation and self-localization unit 60, the self-localization by the map-generation and self-localization unit 60, and the generation of correction information by the scale correction unit 61 may be performed simultaneously. For example, the scale of an environment map generated at a certain time point using one spherical camera 20 is corrected using two spherical cameras 20, thereby generating a scale-corrected environment map. After that, self-localization is performed using the scale-corrected environment map, and the map is described to expand the map while calculating the scale coefficient at desired timing using the two spherical cameras 20 and applying the scale coefficient to the environment map. In this case, map description may be performed based only on the spherical images captured by one of the spherical cameras 20.

Modifications of Functional Configuration

In the embodiment described above, the on-board computer 50 includes the mobile-body position obtaining unit 52. Alternatively, the mobile-body position obtaining unit 52 may be included in a device other than the on-board computer 50, for example, in the server 70 and performs the processing using the images captured by the spherical cameras 20A and 20B and received by the in the server 70 via the network 400. Yet alternatively, the mobile-body position obtaining unit 52 may be included in the touch-screen information terminal 23 or the spherical camera 20.

Yet alternatively, the mobile-body position obtaining unit 52 may reside on a physical or virtual server on a cloud, and may be provided as a cloud service that provides an environment map generated receiving the continuous input of spherical images from the spherical cameras 20A and 20B. The spherical images may be moving image data or as a sequence of still images and received as a file or as stream data.

As described above, the above-described embodiments provide the information processing system, the information processing apparatus, the information processing method, and the program that can correct the scale of an environment map using a monocular image without using any auxiliary sensors or markers other than the imaging device.

In particular, in the configuration in which self-localization and environment map generation are performed based on captured images, an environment map with an unknown distance unit can be corrected to an environment map with a certain distance unit. In this case, the known reference distance D between the spherical cameras 20A and 20B is specified, and the travel distance in the system is converted into a known actual measured distance when map generation is completed, when self-localization is performed after the completion of the map generation, and during map generation, thereby automatically performing accurate map scale correction.

Each of the functions described above may be implemented by one or more processing circuits or circuitry. The "processing circuit or circuitry" in the present disclosure includes a programmed processor to execute each function by software, such as a processor implemented by an electronic circuit, and devices, such as an application-specific integrated circuit (ASIC), a digital signal processor (DSP), a field-programmable gate array (FPGA), and circuit modules arranged to perform the recited functions.

The apparatuses or devices described above are merely one example of multiple computing environments that implement the embodiments disclosed herein. The information processing apparatus may include multiple computing devices such as a server cluster. The multiple computing devices communicate with one another through any type of communication link including, for example, a network and a shared memory, and perform the processes disclosed in the present disclosure.

The embodiments described above are illustrative and do not limit the present disclosure. Thus, numerous additional modifications and variations are possible in light of the above teachings. For example, elements may be added, substituted, or deleted within the scope conceivable by those skilled in the art. Any embodiment that provides a function and an effect according to the present disclosure is within the scope of the present invention.

Aspects of the present disclosure are, for example, as follows.

A first aspect provides an information processing system that determines a position using a first imaging device and a second imaging device each of which is mounted on a mobile body and captures a monocular image. The information processing system includes a storage unit that stores an environment map depicting a surrounding environment in which the mobile body moves, a first self-localization unit that determines a first position of the first imaging device on the environment map based on the image captured by the first imaging device and the environment map, a second self-localization unit that determines a second position of the second imaging device on the environment map based on the image captured by the second imaging device and the environment map, and a correction unit that generates correction information for correcting a scale of the environment map based on a distance between the first position and the second position on the environment map and a reference distance between the first imaging device and the second imaging device.

In a second aspect, the information processing system according to the first aspect further includes an environment map generation unit that generates the environment map based on multiple images captured by either the first imaging device or the second imaging device while the mobile body moves along a route.

In a third aspect, in the information processing system according to the second aspect, after the environment map generation unit generates the environment map while the mobile body moves along the route, the first self-localization unit and the second self-localization unit determine the first position and the second position, respectively, and the correction unit generates the correction information.

In a fourth aspect, in the information processing system according to the second or third aspect, parallel to generation of the environment map by the environment map, the first self-localization unit and the second self-localization unit self-position determine the first position and the second position, respectively, and the correction unit generates the correction information.

In a fifth aspect, in the information processing system according to any one of the first to fourth aspects, the environment map includes a first portion generated in a first space of the surrounding environment, and a second portion generated in a second space of the surrounding environment different from the first space, and the correction unit corrects a scale of the first portion and a scale of the second portion to be consistent with each other based on a determination that a distance between the first position of the first imaging device and the second position of the second imaging device in the first portion of the environment map is equal to a distance between a third position of the first imaging device and a fourth position of the second imaging device in the second portion of the environment map.

In a sixth aspect, in the information processing system according to any one of the first to fifth aspects, the first imaging device and the second imaging device are disposed at ends of the mobile body separated from each other.

In a seventh aspect, in the information processing system according to the sixth aspect, the first imaging device and the second imaging device are at an interval from each other in a direction perpendicular to the moving direction of the mobile body.

In an eighth aspect, in the information processing system according to any one of the first to seventh aspects, each of the first imaging device and the second imaging device is a spherical camera.

In a ninth aspect, an information processing apparatus determines a position using a first imaging device and a second imaging device each of which is mounted on a mobile body and captures a monocular image. The information processing apparatus includes a storage unit that stores an environment map depicting a surrounding environment in which the mobile body moves, a first self-localization unit that determines a first position of the first imaging device on the environment map based on an image captured by the first imaging device and the environment map, a second self-localization unit that determines a second position of the second imaging device on the environment map based on an image captured by the second imaging device and the environment map, and a correction unit that generates correction information for correcting a scale of the environment map based on a distance between the first position and the second position on the environment map and a reference distance between the first imaging device and the second imaging device that is given in advance.

A tenth aspect provides an information processing method for determining a position using a first imaging device and a second imaging device each of which is mounted on a mobile body and captures a monocular image. The method includes reading out an environment map depicting a surrounding environment in which the mobile body moves, determining a first position of the first imaging device on the environment map based on the image captured by the first imaging device and the environment map, determining a second position of the second imaging device on the environment map based on the image captured by the second imaging device and the environment map, and generating correction information for correcting a scale of the environment map based on a distance between the first position and the second position on the environment map and a reference distance between the first imaging device and the second imaging device.

An eleventh aspect provides a carrier medium or recording medium storing computer program codes which, when executed by a computer system, cause the computer system to carry out a method for determining a position using a first imaging device and a second imaging device each of which is mounted on a mobile body and captures a monocular image. The method includes storing an environment map depicting a surrounding environment in which the mobile body moves, determining a first position of the first imaging device on the environment map based on the image captured by the first imaging device and the environment map, determining a second position of the second imaging device on the environment map based on the image captured by the second imaging device and the environment map, and generating correction information for correcting a scale of the environment map based on a distance between the first position and the second position on the environment map and a reference distance between the first imaging device and the second imaging device.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid-state memory device.

**Claims**

1. An information processing system configured to determine a position using a first imaging device (20A) and a second imaging device (20B) each of which is mounted on a mobile body (10) and captures monocular images, the information processing system comprising:

   a storage area (69) configured to store an environment map depicting a surrounding environment in which the mobile body (10) moves;
   a first self-localization unit (60) configured to determine a first position of the first imaging device (20A) on the environment map based on a monocular image captured by the first imaging device (20A) and the environment map;
   a second self-localization unit (60) configured to determine a second position of the second imaging device (20B) on the environment map based on a monocular image captured by the second imaging device (20B) and the environment map; and

a correction unit (61) configured to generate correction information for correcting a scale of the environment map based on a distance between the first position and the second position on the environment map and a reference distance between the first imaging device (20A) and the second imaging device (20B).

2. The information processing system according to claim 1, further comprising an environment map generation unit (65, 66) configured to generate the environment map based on multiple monocular images captured by either the first imaging device (20A) or the second imaging device (20B) while the mobile body (10) moves along a route.

3. The information processing system according to claim 2, wherein, after the environment map is generated, the first self-localization unit (60) and the second self-localization unit (60) determine the first position and the second position, respectively, and the correction unit (61) generates the correction information.

4. The information processing system according to claim 2 or 3, wherein, parallel to generation of the environment map, the first self-localization unit (60) and the second self-localization unit (60) determine the first position and the second position, respectively, and the correction unit (61) generates the correction information.

5. The information processing system according to any one of claims 1 to 4, wherein:

    the environment map includes a first portion generated in a first space of the surrounding environment, and a second portion generated in a second space of the surrounding environment, the second space being different from the first space, and
    the correction unit (61) corrects a scale of the first portion and a scale of the second portion to be consistent with each other based on a determination that the distance between the first position of the first imaging device (20A) and the second position of the second imaging device (20B) is equal between the first portion and the second portion.

6. The information processing system according to any one of claims 1 to 5, wherein the first imaging device (20A) is at a first end of the mobile body (10), and the second imaging device (20B) is at a second end of the mobile body (10) separated apart from the first end.

7. The information processing system according to claim 6, wherein the first imaging device (20A) and the second imaging device (20B) are at an interval from each other in a direction perpendicular to a moving direction of the mobile body (10).

8. The information processing system according to any one of claims 1 to 7, wherein each of the first imaging device (20A) and the second imaging device (20B) is a spherical camera.

9. An information processing method for determining a position using a first imaging device (20A) and a second imaging device (20B) each of which is mounted on a mobile body (10) and captures monocular images, the method comprising:

    reading (S 102) an environment map depicting a surrounding environment in which the mobile body (10) moves from a storage area;
    determining (S103) a first position of the first imaging device (20A) on the environment map based on a monocular image captured by the first imaging device (20A) and the environment map;
    determining (S103) a second position of the second imaging device (20B) on the environment map based on a monocular image captured by the second imaging device (20B) and the environment map; and
    generating (S 106) correction information for correcting a scale of the environment map based on a distance between the first position and the second position on the environment map and a reference distance between the first imaging device (20A) and the second imaging device (20B).

10. A carrier medium carrying computer readable codes which, when executed by a computer system, cause the computer system to carry out a method according to claim 9.

14

FIG. 1

# FIG. 2

EP 4 621 715 A1

# FIG. 3

# FIG. 4

EP 4 621 715 A1

# FIG. 5

1

20 SPHERICAL CAMERA

20 SPHERICAL CAMERA

ON-BOARD COMPUTER 50

51 COMMUNICATION UNIT

53 HOLDING-STATUS OBTAINING UNIT

52 MOBILE-BODY POSITION OBTAINING UNIT

54 IDENTIFICATION INFORMATION OBTAINING UNIT

56 OBJECT POSITION OBTAINING UNIT

55 TIME OBTAINING UNIT

58 STORAGE UNIT

57 OUTPUT UNIT

59 INPUT UNIT

# FIG. 6

SPHERICAL CAMERA — 20A
— 20B

MOBILE-BODY POSITION OBTAINING UNIT — 52

MAP-GENERATION AND SELF-LOCALIZATION UNIT — 60

IMAGE — 62

TRACKING UNIT — 64

SELF-LOCALIZATION RESULT

INPUT OF KEYFRAME

GLOBAL OPTIMIZATION UNIT — 66

LOCAL OPTIMIZATION UNIT — 65

SCALE CORRECTION UNIT (SCALING) — 61

STORAGE UNIT — 58

REFERENCE DISTANCE

GLOBAL BUNDLE ADJUSTMENT

LOCAL BUNDLE ADJUSTMENT

MAP SCALING CORRECTION

D

STORAGE AREA

GLOBAL MAP — 68

LOCAL MAP — 67

— 69

INPUT UNIT

59

EP 4 621 715 A1

# FIG. 7

START

OBTAIN REFERENCE DISTANCE D
BETWEEN TWO SPHERICAL CAMERAS — S101

GENERATE MAP USING ONE
SPHERICAL CAMERA — S102

DETERMINE POSITIONS OF
TWO SPHERICAL CAMERAS
ON ENVIRONMENT MAP — S103

CALCULATE VIRTUAL DISTANCE d
BETWEEN CAMERAS ON COORDINATE
SYSTEM — S104

CALCULATE SCALE COEFFICIENT
$\alpha = D/d$ — S105

CORRECT SCALE OF
ENVIRONMENT MAP — S106

END

# FIG. 8

VIRTUAL DISTANCE IN UNKNOWN UNIT
ON GENERATED ENVIRONMENT MAP

ACTUAL DISTANCE (m)

SCALE
CORRECT

VIRTUAL DISTANCE IN UNKNOWN UNIT
ON GENERATED ENVIRONMENT MAP × $\alpha$

⇒DISTANCE (m) ON SCALE-CORRECTED
ENVIRONMENT MAP

## FIG. 9

# FIG. 10

# FIG. 11

| Registration Window | map |
| --- | --- |

Pallet ID

2

Location ID

3

10m    20m

EP 4 621 715 A1

## EUROPEAN SEARCH REPORT

**Application Number**

EP 25 15 7572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2023 137739 A (RICOH CO LTD) 29 September 2023 (2023-09-29) | 1-4,6-10 | INV. G06T7/579 |
| A | * paragraph [0002] - paragraph [0003] * * paragraph [0007] * * paragraph [0017] * * paragraph [0051] - paragraph [0064] * * paragraph [0091] * * figure 12(B) * | 5 | |
| Y | SHINICHI GOTO ET AL: "3D environment measurement using binocular stereo and motion stereo by mobile robot with omnidirectional stereo camera", 2011 IEEE INTERNATIONAL CONFERENCE ON COMPUTER VISION WORKSHOPS (ICCV WORKSHOPS), IEEE, 6 November 2011 (2011-11-06), pages 296-303, XP032095253, DOI: 10.1109/ICCVW.2011.6130256 ISBN: 978-1-4673-0062-9 * abstract * * section 1 * * figures 2, 3, 4, 5 * | 1-4,6-10 | |
| A | JIAWEI MO ET AL: "DSVO: Direct Stereo Visual Odometry", ARXIV.ORG, CORNELL UNIVERSITY LIBRARY, 201 OLIN LIBRARY CORNELL UNIVERSITY ITHACA, NY 14853, 19 September 2018 (2018-09-19), XP081143632, * abstract * * section 3.4 * | 1-10 | |

**TECHNICAL FIELDS SEARCHED (IPC)**

G06T

The present search report has been drawn up for all claims

| Place of search | Date of completion of the search | Examiner |
|---|---|---|
| Munich | 11 July 2025 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7572

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | Publication date |
|---|---|---|---|
| JP 2023137739 A | 29-09-2023 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022015978 A

**Non-patent literature cited in the description**

- **TOMONO MASAHIRO** ; **YOSHITAKA HARA**. Current and Future Directions in SLAM. *Systems, Control and Information*, 2020, vol. 64 (2), 45-50

- **SUMIKURA** ; **SHINYA** ; **MIKIYA SHIBUYA** ; **KEN SAKURADA**. OpenVSLAM: A Versatile Visual SLAM Framework. *MM '19: Proceedings of the 27th ACM International Conference on Multimedia*, 2292-2295